# EUROPEAN PATENT APPLICATION

(11) **EP 4 834 664 A1**
(43) Date of publication of application: **04.11.2026**
(21) Application number: 25178116.7
(22) Date of filing: 22.05.2025
(51) Int. Cl.: B60R 16/02, H02G 3/22

(54) **GROMMET FOR ELECTRICAL ASSEMBLY**

(30) Priority: 29.04.2025 US 202519193043
(71) Applicant: Aptiv Technologies AG, 8200 Schaffhausen (CH)
(72) Inventor: PETERSON, David R., 8200 Schaffhausen (CH); MICHAEL, Jeffrey, 8200 Schaffhausen (CH); VANSUCH, Stephen, 8200 Schaffhausen (CH); DEAN, Robert, 8200 Schaffhausen (CH); SUDIK JR., Joseph, 8200 Schaffhausen (CH)
(74) Representative: Bardehle Pagenberg Partnerschaft mbB Patentanwälte Rechtsanwälte

(57) **Abstract**

A grommet for an electrical assembly includes a base and a trunk. The trunk extends from the base. The trunk includes a portion configured to flex to restrict a flow of fluid in the trunk.

## Description

### FIELD

The present disclosure relates to a grommet for an electrical assembly and more particularly to a grommet that may be used with a vehicle.

### BACKGROUND

Modem vehicles rely on electrical wiring and connections to facilitate communication between various electronic components. The integrity of these connections is essential to the overall reliability and performance of the vehicle. Grommets contribute to this integrity by protecting electrical connections from environmental factors that may lead to degradation. The use of grommets improves the durability of the connections and helps ensure consistent performance under demanding conditions. As a result, grommets support the reliability of critical systems, thereby contributing to safer and more efficient vehicle operation. While known grommets have proven acceptable for their intended purpose, a continuous need for improvement remains in the pertinent art to provide enhanced protection against environmental ingress, such as water intrusion.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

One aspect of the disclosure provides a grommet for an electrical assembly. The grommet includes a base and a trunk extending from the base. The trunk includes a portion configured to flex to restrict a flow of fluid in the trunk.

Another aspect of the disclosure provides a grommet for an electrical assembly. The grommet includes a wall, a dam, and an aperture. The wall includes a proximal end and a distal end opposite the proximal end. The wall defines a central passage extending between the proximal end and the distal end. The dam is disposed in the central passage and extends from the wall between the proximal end and the distal end. The aperture extends through the wall between the dam and the distal end and is in fluid communication with the central passage.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a perspective view of an example grommet in accordance with the principles of the present disclosure.
FIG. 2 is a cross-sectional view of the grommet of FIG. 1 taken through the line 2-2.
FIG. 3 is a perspective view of a portion of an example grommet in accordance with the principles of the present disclosure.
FIG. 4 is a front view of an example grommet in accordance with the principles of the present disclosure.
FIG. 5 is a rear view of an example grommet in accordance with the principles of the present disclosure.
FIG. 6 is a perspective view of an example grommet in an assembled configuration in accordance with the principles of the present disclosure.

In the drawings, reference numbers may be reused to identify similar and/or identical elements.

### DETAILED DESCRIPTION

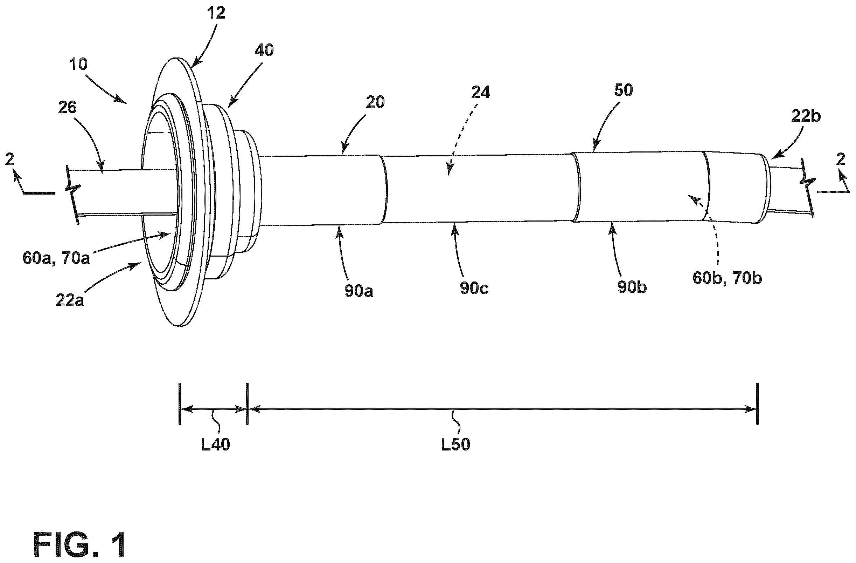

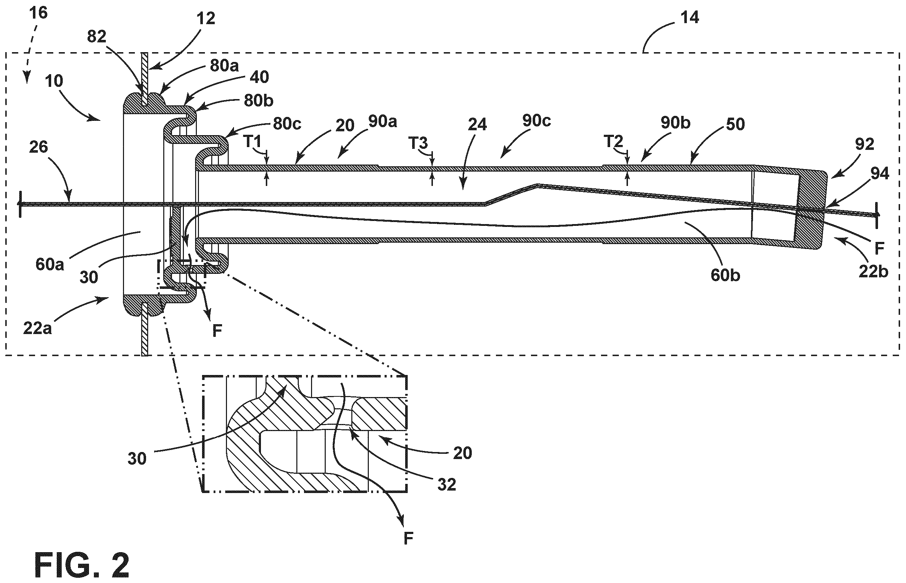

With reference to FIGS. 1 and 2, an example grommet 10 is shown. The grommet 10 may comprise one or more of a variety of shapes, sizes, configurations, and/or materials. In various implementations, the grommet 10 couples to a substrate 12 of a vehicle 14. The substrate 12 may be a component, a surface, a panel, or a module of the vehicle 14. The grommet 10 may receive one or more components of an electrical assembly (e.g., a flat flexible cable, etc.). The grommet 10 may be composed of rubber, plastic, or a combination of both materials. In some example configurations, the grommet 10 is composed of a synthetic rubber, such as ethylene propylene diene monomer (EPDM). As will be explained in more detail below, the grommet 10 restricts and/or inhibits fluid (e.g., water) from entering an interior 16 of the vehicle 14.

In various implementations, the grommet 10 includes a wall 20. The wall 20 may include a proximal end 22a and a distal end 22b opposite the proximal end 22a. The wall may define a central passage 24 extending between the proximal end 22a and the distal end 22b. The central passage 24 may receive a flat flexible cable 26.

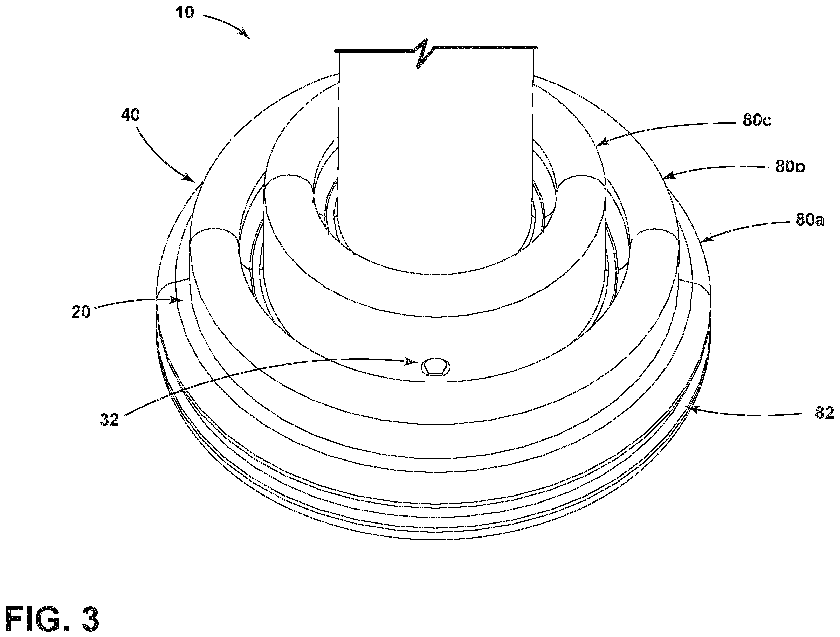

In various implementations, the grommet 10 includes a dam 30. The dam 30 may be disposed in the central passage 24. The dam 30 may extend from the wall 20 between the proximal end 22a and the distal end 22b. In various implementations, the grommet 10 includes an aperture 32. The aperture 32 may extend through the wall 20 (see, e.g., FIGS. 2 and 3). The aperture 32 may be disposed between the dam 30 and the distal end 22b. The aperture 32 may be in fluid communication with the central passage 24.

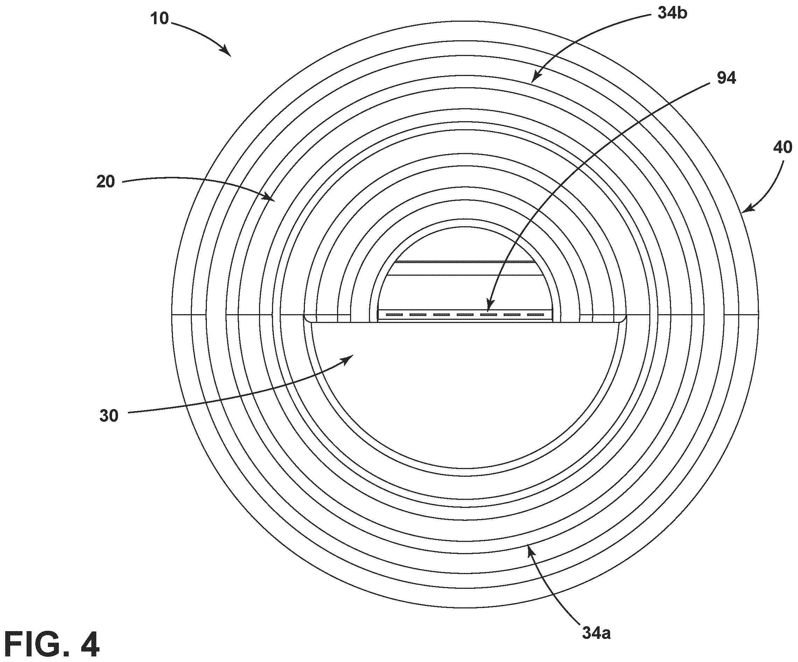

With reference to FIG. 4, in various implementations, the dam 30 extends from a first side 34a of the wall 20 to a second side 34b of the wall 20 opposite the first side 34a. In various implementations, the dam 30 defines a semi-circular shape.

Referring again to FIGS. 1 and 2, the wall 20 may define a base 40 and a trunk 50 extending from the base 40. In various implementations, the dam 30 restricts and/or inhibits a flow of fluid from the base 40 to the trunk 50. The base 40 may define a proximal portion 60a of the central passage 24. The trunk 50 may define a distal portion 60b of central passage 24. The distal portion 60b may be in fluid communication with the proximal portion 60a of the central passage 24. The dam 30 may restrict and/or inhibit the flow of fluid from proximal portion 60a to the distal portion 60b.

With continued reference to FIGS. 1 and 2, the grommet 10 may include a base 40 and a trunk 50 extending from the base 40. The base 40 may define a first central passage 70a and the trunk 50 may define a second central passage 70b in fluid communication with the first central passage 70a. The first and second central passages 70a, 70b may receive a flat flexible cable 26. The base 40 may define a first length L40 and the trunk 50 may define a second length L50. The second length L50 may be greater than the first length L40. The base 40 may include a dam 30 and an aperture 32.

With reference to FIGS. 2 and 3, the base 40 may include a first tube portion 80a, a second tube portion 80b, and a third tube portion 80c. The second tube portion 80b may extend from the first tube portion 80a. The third tube portion 80c may extend from the second tube portion 80b. The trunk 50 may extend from the third tube portion 80c. The first tube portion 80a may define an outer channel 82. The outer channel 82 may receive the substrate 12.

Referring now to FIG. 2, in various implementations, the trunk 50 includes a first portion 90a (e.g., a proximal portion), a second portion 90b (e.g., a distal portion), and a third portion 90c (e.g., a central portion), among others. The third portion 90c may be disposed between the first and second portions 90a, 90b. The first portion 90a may define a first thickness T1. The second portion 90b may define a second thickness T2. The third portion 90c may define a third thickness T3. The third thickness T3 may be less than the first and second thicknesses T1, T2. As will be explained in more detail below, the third portion 90c folds and/or flexes to restrict and/or inhibit fluid flowing through the trunk 50. While the trunk 50 is generally described herein as including three portions 90, the trunk 50 may include more or less than three portions 90.

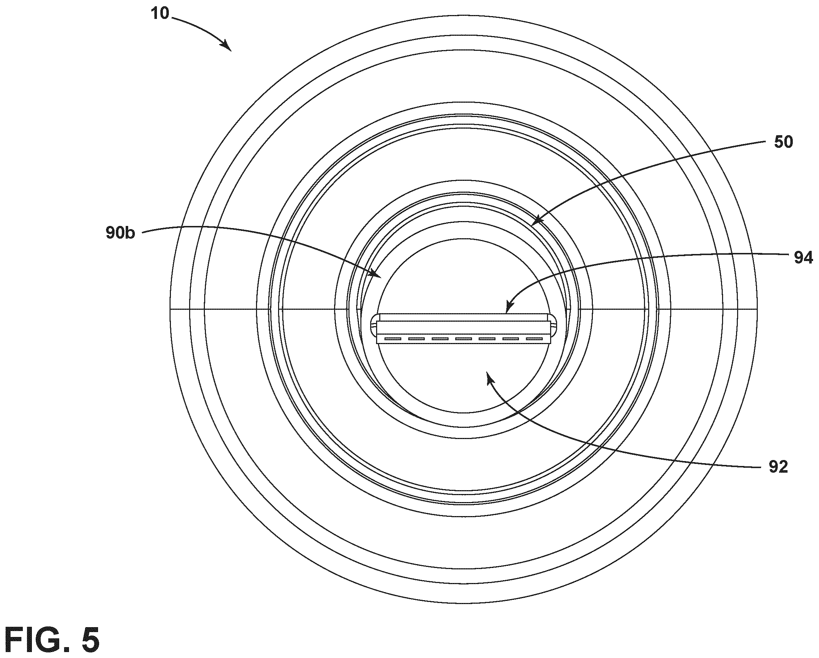

With reference to FIGS. 2 and 5, in various implementations, the second portion 90b of the trunk 50 includes a terminal end wall 92. The end wall 92 may define a slot 94. The slot 94 may receive a portion of the flat flexible cable 26. In various implementations, the end wall 92 restricts and/or inhibits fluid from exiting the trunk 50.

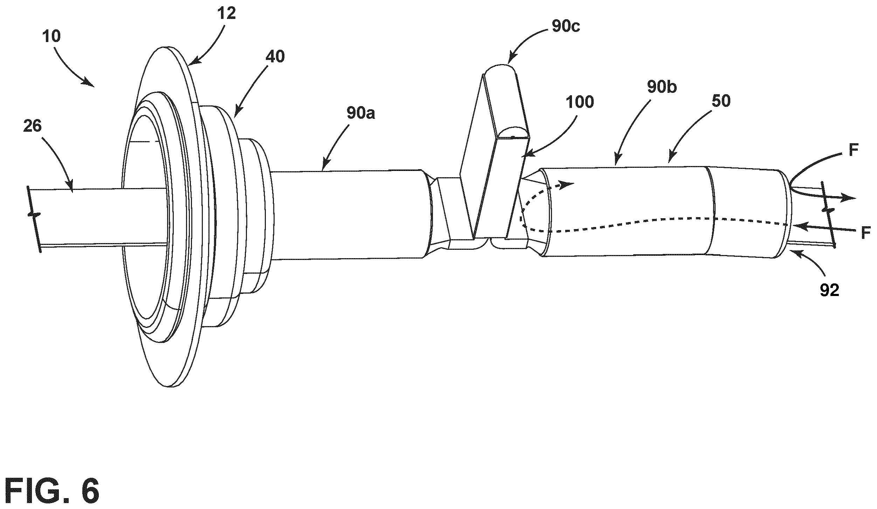

With reference to FIG. 6, the grommet 10 is shown in an assembled configuration. In the assembled configuration, the third portion 90c of the trunk 50 may be in a folded configuration to restrict and/or inhibit fluid from flowing through the trunk 50. The third portion 90c may be held in the folded configuration via a restraining element 100 (e.g., tape, band, strap, etc.).

With reference to FIG. 2, during operation of the vehicle 14, fluid F may enter the grommet 10 (e.g., the trunk 50). The dam 30 may collect at least some of the fluid F. In response to fluid F being disposed in the dam 30, the fluid F may exit the grommet 10 via the aperture 32. For example, the dam 30 may guide the fluid F through the aperture 32. This restricts and/or inhibits the fluid F from entering the interior 16 of the vehicle 14.

With reference to FIG. 6, in various implementations, during operation of the vehicle 14, the terminal end wall 92 restricts and/or inhibits the fluid F from entering the grommet 10. For example, the end wall 92 may block the fluid F from entering the grommet 10. This restricts and/or inhibits the fluid F from entering the interior 16 of the vehicle 14.

With continued reference to FIG. 6, during operation of the vehicle 14, fluid F may enter the trunk 50. In response to the third portion 90c of the trunk 50 being in the folded configuration, the third portion 90c restricts and/or inhibits the fluid F from flowing through the trunk 50. For example, the third portion 90c may block the fluid F from flowing through the trunk 50. This restricts and/or inhibits the fluid F from entering the interior 16 of the vehicle 14.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for a grommet, as described above.

Clause 1: A grommet for an electrical assembly, the grommet comprising: a base; and a trunk extending from the base and including a portion configured to flex to restrict a flow of fluid in the trunk.

Clause 2: The grommet of clause 1, wherein: the base defines a first central passage, and the trunk defines a second central passage in fluid communication with the first central passage.

Clause 3: The grommet of clause 2, wherein the first and second central passages are configured to receive a flat flexible cable.

Clause 4: The grommet of any of clauses 1 through 3, wherein the trunk includes: a proximal portion defining a first thickness; a distal portion defining a second thickness; and a central portion disposed between the proximal portion and the distal portion and defining a third thickness less than the first thickness and the second thickness.

Clause 5: The grommet of clause 4, wherein, in an assembled configuration, the central portion is in a folded configuration.

Clause 6: The grommet of clause 5, wherein the folded configuration restricts fluid from flowing through the trunk.

Clause 7: The grommet of clause 5, wherein the central portion is secured in the folded configuration by a restraining element.

Clause 8: The grommet of clause 4, wherein: the distal portion includes a terminal end wall, the end wall defines a slot that receives a portion of a flat conductor, and the end wall restricts fluid from exiting the trunk.

Clause 9: The grommet of any of clauses 1 through 8, wherein: the base defines a first length, and the trunk defines a second length that is greater than the first length.

Clause 10: A vehicle comprising: a substrate; and the grommet of any of clauses 1 through 9 coupled to the substrate, the grommet configured to restrict fluid from entering an interior of the vehicle.

Clause 11: A grommet for an electrical assembly, the grommet comprising: a wall including a proximal end and a distal end opposite the proximal end, the wall defining a central passage extending between the proximal end and the distal end; a dam disposed in the central passage and extending from the wall between the proximal end and the distal end; and an aperture extending through the wall between the dam and the distal end and in fluid communication with the central passage.

Clause 12: The grommet of clause 11, wherein the wall defines a base and a trunk extending from the base, the dam configured to restrict a flow of fluid from the trunk to the base.

Clause 13: The grommet of clause 12, wherein: the base defines a proximal portion of the central passage, the trunk defines a distal portion of central passage in fluid communication with the proximal portion of the central passage, and the dam is configured to restrict the flow of fluid from the distal portion to the proximal portion.

Clause 14: The grommet of clause 12, wherein the base includes: a first tube portion, a second tube portion extending from the first tube portion, and a third tube portion extending from the second tube portion.

Clause 15: The grommet of clause 14, wherein the first tube portion defines an outer channel configured to receive a substrate.

Clause 16: The grommet of clause 14, wherein the trunk extends from the third tube portion.

Clause 17: The grommet of clause 12, wherein a portion of the trunk is configured to flex to restrict fluid from flowing through the trunk.

Clause 18: The grommet of any of clauses 11 through 17, wherein the dam extends from a first side of the wall to a second side of the wall opposite the first side.

Clause 19: The grommet of clause 18, wherein the dam defines a semi-circular shape.

Clause 20: A vehicle (14) comprising: a substrate (12); and the grommet (10) of any of clauses 11 through 19 coupled to the substrate (12), the grommet (10) configured to restrict fluid from entering an interior of the vehicle (14).

## Claims

1. A grommet (10) for an electrical assembly, the grommet (10) comprising:
a base (40); and
a trunk (50) extending from the base (40) and including a portion (90, 90a-c) configured to flex to restrict a flow of fluid in the trunk (50).

2. The grommet (10) of claim 1 wherein:
the base (40) defines a first central passage (70a), and
the trunk (50) defines a second central passage in fluid communication with the first central passage (70a) wherein preferably the first and second central passages (24, 70a, 70b) are configured to receive a flat flexible cable (26).

3. The grommet (10) of claim 1 or 2 wherein the trunk (50) includes:
a proximal portion (60a) defining a first thickness;
a distal portion (60b) defining a second thickness; and
a central portion disposed between the proximal portion (60a) and the distal portion (60b) and defining a third thickness less than the first thickness and the second thickness.

4. The grommet (10) of claim 3 wherein, in an assembled configuration, the central portion is in a folded configuration, and wherein preferably the folded configuration restricts fluid from flowing through the trunk (50).

5. The grommet (10) of claim 3 or 4 wherein the central portion is secured in the folded configuration by a restraining element (100).

6. The grommet (10) of any one of claims 3 to 5 wherein:
the distal portion (60b) includes a terminal end wall (92),
the end wall (92) defines a slot (94) that receives a portion (90, 90a-c) of a flat conductor, and
the end wall (92) restricts fluid from exiting the trunk (50).

7. The grommet (10) of any one of the preceding claims wherein:
the base (40) defines a first length, and
the trunk (50) defines a second length that is greater than the first length.

8. A vehicle (14) comprising:
a substrate (12); and
the grommet (10) of any one of claims 1 to 7 coupled to the substrate (12), the grommet (10) configured to restrict fluid from entering an interior of the vehicle (14).

9. A grommet (10) for an electrical assembly, the grommet (10) comprising:
a wall (20) including a proximal end (22a) and a distal end (22b) opposite the proximal end (22a), the wall (20) defining a central passage (24, 70a, 70b) extending between the proximal end (22a) and the distal end (22b);
a dam (30) disposed in the central passage (24, 70a, 70b) and extending from the wall (20) between the proximal end (22a) and the distal end (22b); and
an aperture (32) extending through the wall (20) between the dam (30) and the distal end (22b) and in fluid communication with the central passage (24, 70a, 70b).

10. The grommet (10) of claim 9 wherein the wall (20) defines a base (40) and a trunk (50) extending from the base (40), the dam (30) configured to restrict a flow of fluid from the trunk (50) to the base (40), wherein preferably:
the base (40) defines a proximal portion (60a) of the central passage (24, 70a, 70b),
the trunk (50) defines a distal portion (60b) of central passage (24, 70a, 70b) in fluid communication with the proximal portion (60a) of the central passage (24, 70a, 70b), and
the dam (30) is configured to inhibit the flow of fluid from the distal portion (60b) to the proximal portion (60a).

11. The grommet (10) of claim 9 or 10 wherein the base (40) includes:
a first tube portion (80a),
a second tube portion (80b) extending from the first tube portion (80a), and
a third tube portion (80c) extending from the second tube portion (80b),
wherein preferably the first tube portion (80a) defines an outer channel (82) configured to receive a substrate (12).

12. The grommet (10) of claim 11 wherein the trunk (50) extends from the third tube portion (80c).

13. The grommet (10) of any one of claims 10 to 12 wherein a portion (90, 90a-c) of the trunk (50) is configured to flex to restrict fluid from flowing through the trunk (50).

14. The grommet (10) of any one of claims 9 to 13 wherein the dam (30) extends from a first side (34a) of the wall (20) to a second side (34b) of the wall (20) opposite the first side (34a), and wherein preferably the dam (30) defines a semi-circular shape.

15. A vehicle (14) comprising:
a substrate (12); and
the grommet (10) of any one of claims 9 to 14 coupled to the substrate (12), the grommet (10) configured to restrict fluid from entering an interior of the vehicle (14).
